# EUROPÄISCHE PATENTSCHRIFT

(11) **EP 3 479 658 B1**
(45) Veröffentlichungstag und Bekanntmachung des Hinweises auf die Patenterteilung: **24.03.2021**
(21) Anmeldenummer: 17735057.6
(22) Anmeldetag: 26.06.2017
(51) Int. Cl.: H05B 47/105, H05B 47/11

(54) **BELEUCHTUNGSSYSTEM MIT ORTSBEZOGENER MESSWERTERFASSUNG**
LIGHTING SYSTEM WITH LOCATION RELATED MEASURED VALUES
SYSTÈME D'ÉCLAIRAGE AVEC ACQUISITION DE VALEURS MESURÉES BASÉE SUR LA LOCALISATION

(30) Priorität: 04.07.2016 DE 102016212108
(43) Veröffentlichungstag der Anmeldung: 08.05.2019
(73) Patentinhaber: Zumtobel Lighting GmbH, 6850 Dornbirn (AT)
(72) Erfinder: MAYR, Gregor, 6974 Gaißau (AT)
(74) Vertreter: Beder, Jens
(86) Internationale Anmeldenummer: PCT/EP2017/065745
(87) Internationale Veröffentlichungsnummer: WO 2018/007190

(56) Entgegenhaltungen:
- EP-A1- 3 026 507
- US-A1- 2012 143 357
- US-A1- 2015 181 678

## Beschreibung

Die vorliegende Erfindung betrifft ein Beleuchtungssystem mit einer Mehrzahl von Leuchtvorrichtungen, die jeweils mit einer Sensoreinheit verbunden sind. Die Sensoreinheiten ermitteln Messwerte, die über das Beleuchtungssystem ortsbezogen erfasst und ausgewertet werden. Das erfindungsgemäße Beleuchtungssystem stellt eine Kommunikationsinfrastruktur und die Verknüpfung des ermittelten Messwerts mit einer Ortsinformation der ermittelnden Sensoreinheit bereit.

Es ist bekannt, für Beleuchtungsaufgaben, beispielsweise innerhalb Gebäuden, Beleuchtungssysteme mit einer Vielzahl von einzelnen Leuchtvorrichtungen und einer zentralen Steuerung der einzelnen Leuchtvorrichtungen durch eine zentrale Steuereinheit zu nutzen. Bei solchen bekannten Beleuchtungssystemen werden die einzelnen Leuchtvorrichtungen über ein Kommunikationsnetzwerk verbunden und von der zentralen Steuereinheit über das Kommunikationsnetzwerk angesteuert. Um gezielt einzelne Leuchtvorrichtungen ansteuern zu können, verfügt jede Leuchtvorrichtungen über eine individuelle Adresse.

Bei einer Inbetriebnahme des Beleuchtungssystems ist jede Leuchtvorrichtungen mit ihrer jeweiligen Position innerhalb des auszuleuchtenden Bereichs, beispielsweise eines Gebäudes zu erfassen.

US 2012/0143357 A1 zeigt eine Präsenzerfassungseinheit, die dafür ausgelegt ist, eine von einer Beleuchtungsvorrichtung beleuchtete Umgebung zu überwachen. Die Präsenzerfassungseinheit kann einen Präsenzsensor enthalten, um Strahlung zu erfassen, die mindestens ein Präsenzereignis in der von der Beleuchtungsvorrichtung beleuchteten Umgebung gemäß Erfassungsparametern anzeigt. Der Präsenzsensor kann mit einem Speicher gekoppelt werden, der Sensordaten protokolliert, die die vom Präsenzsensor bereitgestellten Präsenzereignisse darstellen. Ein mit dem Speicher gekoppelter Prozessor führt eine Analyse der im Speicher aufgezeichneten Sensordaten durch und passt die Erfassungsparameter des Präsenzsensors basierend auf der Analyse an.

US 2015/0181678 A1 offenbart Verfahren, Geräte, und Systeme zur Steuerung von Beleuchtungselementen eines Beleuchtungssystems. Das Beleuchtungssystem ist einer Beleuchtungsinfrastruktur zugeordnet, die auf zusammengesetzten Beleuchtungsmodellen basiert. Ein von einem Prozessor einer Rechenvorrichtung ausgeführtes Verfahren kann Operationen zum Erhalten einer Vielzahl von Lichtmodellausgaben umfassen, die durch Lichtsteuerungsalgorithmen erzeugt werden, die Sensordaten verwenden, die von einem oder mehreren Sensorelementen innerhalb der Beleuchtungsinfrastruktur erhalten werden. Die mehreren Lichtmodellausgaben werden auf additive Weise kombiniert, um ein zusammengesetztes Beleuchtungsmodell zu erzeugen. Beleuchtungsparameter für ein Beleuchtungselement innerhalb der Beleuchtungsinfrastruktur werden basierend auf dem zusammengesetzten Beleuchtungsmodell und weiteren Faktoren berechnet. Ein Beleuchtungssteuerungsbefehl zum Konfigurieren des Beleuchtungselements innerhalb der Beleuchtungsinfrastruktur unter Verwendung des berechneten Beleuchtungsparameters wird erzeugt. Das Verfahren kann durch eine beliebige Kombination von Beleuchtungselementen, Sensorelementen, einem getrennt angeordneten Server und/oder anderen Geräten innerhalb der Beleuchtungsinfrastruktur durchgeführt werden.

EP 3 026 507 A1 zeigt ein Verfahren zum Regeln einer durch eine gebäudetechnische Installation steuerbaren Zustandsgröße. Bei dem Verfahren wird die Zustandsgröße über die Zeit zumindest über eine vorgegebene Zeitspanne erfasst und die erfasste Zustandsgröße als IST-Zustandsgröße mit einer SOLL-Zustandsgröße verglichen. Bei Feststellen einer Regelabweichung wird diese daraufhin bewertet, ob das zum Ansteuern der gebäudetechnischen Installation vorgesehene Stellglied zum Kompensieren der Regelabweichung veranlasst werden soll oder nicht. Für den Fall einer zu veranlassenden Kompensation des Stellglieds wird anschließend die Änderung der Zustandsgröße in Bezug auf die Beeinflussung des Stellglieds überwacht, ob (i) die bewirkte Änderung der Zustandsgröße hinreichend war, um die Regelabweichung zu kompensieren, und (ii) das Änderungsverhalten der Zustandsgröße als IST-Änderungsverhalten in hinreichender Form einem SOLL-Änderungsverhalten entspricht. Bei Feststellen einer Regelabweichung bezüglich des Änderungsverhaltens der Zustandsgröße bei der nächsten Beeinflussung des Stellglieds erfolgt die Beeinflussung zum Annähern der Abweichung des erfassten IST-Änderungsverhaltens an das SOLL-Änderungsverhalten mit zumindest einem geänderten Regelparameter.

Neben Beleuchtungssystemen sind weitere Gebäudetechniksysteme bekannt. Diese Gebäudetechniksysteme umfassen beispielsweise Klimatisierungssysteme oder Brandmeldesysteme. Solche Systeme erfassen physikalische Parameter wie Temperatur, Rauchkonzentration, CO2-Konzentration mit über ein Gebäude verteilten Sensoren und melden die erfassten physikalischen Parameter, insbesondere Messwerte und/oder davon abgeleitete Informationen an eine oder mehrere Steuereinheiten. Zusätzliche Infrastruktur in Gebäuden umfasst darüber hinaus häufig auch Lautsprechersysteme oder Sensorsysteme, die jeweils parallel zu Beleuchtungssystemen ausgeführt und vernetzt werden müssen. Damit ist ein erheblicher Aufwand für den Aufbau verteilter Infrastruktur in paralleler und teilweise redundanter Weise verbunden.

Aufgabe der vorliegenden Erfindung ist es, eine ortsbezogene Messwerterfassung mit möglichst geringem Aufwand schaffen.

Die Aufgabe wird durch ein Beleuchtungssystem gemäß Anspruch 1 gelöst.

Das erfindungsgemäße Beleuchtungssystem umfasst eine Mehrzahl von Leuchtvorrichtungen mit jeweils einer verbundenen Sensoreinheit, und eine Steuereinheit. Jede Sensoreinheit ist eingerichtet, mindestens einen Messwert für einen lokalen Umgebungsparameter der Leuchtvorrichtung zu ermitteln, und über das Netzwerk an die Steuereinheit zu übertragen. Die Steuereinheit ist eingerichtet, den übertragenen Messwert mit einer Positionsinformation der verbundenen Leuchtvorrichtung zu verknüpfen und aus einer Mehrzahl von übertragenen Messwerten mit verknüpften Positionsinformationen eine Messwertverteilung zu ermitteln. Das Beleuchtungssystem ist dadurch gekennzeichnet, dass der übertragene, ermittelte Messwert für den lokalen Umgebungsparameter ein physikalischer Parameter ist. Weiter ist die ermittelte Messwertverteilung eine räumliche Messwertverteilung mit zeitlichem Verlauf. Das Beleuchtungssystem umfasst zumindest einen Aktor, wobei der zumindest eine Aktor geeignet ist, den lokalen Umgebungsparameter zu verändern. Die Steuereinheit ist eingerichtet bei einer Betätigung des Aktors eine Zuordnungsinformation des Aktors zu zumindest einer Sensoreinheit mittels der ermittelten Messwertverteilung zu erstellen oder zu verändern.

Das erfindungsgemäße Beleuchtungssystem ermöglicht mittels Nutzung der Lichtsysteminfrastruktur eines Gebäudes zur Datenübertragung sowie zur Positionsermittlung der Sensoreinheit eine effiziente Erfassung ortsbezogener Messwerte für physikalische Parameter. Der Aufbau und die Inbetriebnahme paralleler Strukturen der Gebäudetechnik wird vermieden, indem auf die vorhandene und notwendige Beleuchtungsinfrastruktur für die Positionsermittlung und Kommunikation zwischen Sensoreinheiten und Steuereinheit zur Datenerfassung und Datenauswertung zurückgegriffen wird.

Die Messwertverteilung kann beispielsweise auf Basis eines Lageplans der Sensoreinheiten aus den übertragenen Messwerten erstellt werden. Der Lageplan der Sensoreinheiten über das Gebäude korrespondiert vorteilhaft mit dem Lageplan der mit den Sensoreinheiten verbundenen Leuchtvorrichtungen, wie er bei Inbetriebnahme des Beleuchtungssystems erstellt wird. Die einzelnen Leuchtvorrichtungen sind mit einer Leuchtenadresse versehen, die eine Verknüpfung von übertragenem Messwert, Leuchtenadresse und Ortsinformation ermöglicht. Damit ist auf effiziente Weise die Erstellung einer räumlichen Messwertverteilung in Form z. B. einer Messwertkarte oder einer raumaufgelösten Analyse möglich. Damit ist es auch möglich für ein Gebäude Auswertungen zu erstellen, die bislang mit einzelnen, getrennt montierten Sensoren nicht erstellt werden konnten. Ein Beispiel für eine solche Auswertung ist das Erstellen einer sogenannten Temperaturkarte. Die Verwendung des Lichtsystems hat den Vorteil, dass eine Infrastruktur vorhanden ist, die in einem Gebäude weitverzweigt genutzt werden kann und flächenmäßig das vollständige Gebäude abdeckt.

Das Beleuchtungssystem ermittelt die Messwertverteilung derart, dass die Messwertverteilung die übertragenen Messwerte räumlich und zeitlich auswertet. Die räumliche und zeitliche Auswertung ermöglicht insbesondere auch die Auswirkung einzelner Aktoren, wie beispielsweise steuerbarer Heizkörper auf die erfasste Messwertverteilung auszuwerten und für eine Darstellung aufzubereiten.

Vorteilhafte Weiterbildungen der Erfindung werden in den abhängigen Ansprüchen gezeigt.

Ein vorteilhaftes Beleuchtungssystem umfasst die Steuereinheit eingerichtet dafür, eine Plausibilitätsprüfung über die Messwertverteilung oder zumindest eines Teils hiervon auszuführen, um zumindest einen fehlerhaften Messwert zu erkennen.

Dies ist insbesondere durch Vergleich mit den Werten von benachbarten Sensoreinheiten möglich. Mittels einer Plausibilitätsprüfung wird eine fehlerhaft arbeitende Sensoreinheit erkannt.

Eine vorteilhafte Weiterbildung der Erfindung umfasst ein Beleuchtungssystem mit der Steuereinheit ausgelegt dafür, den erkannten fehlerhaften Messwert zu kompensieren.

Die Verwendung eines verteilten Systems mit einer Vielzahl von kleinen Sensoreinheiten hat Vorteile gegenüber einzelnen Sensoren, da die Redundanz bei den Sensoreinheiten eine verbesserte gegenseitige Überwachung der Sensoren ermöglicht. Einerseits ist der Ausfall von einzelnen Sensoreinheiten zu kompensieren, indem beispielsweise durch Mittelwertbildung aus den Messwerten der benachbarten Sensoren ein simulierter Messwert erzeugt wird. Andererseits kann auch das Ausfallen einer oder mehrerer einzelner Sensoreinheiten überhaupt besser erkannt werden, ohne dass jeder einzelne Sensor eine aufwendige integrierte Überwachungsfunktion (BITE) aufweist.

Ein vorteilhaftes Beleuchtungssystem zeichnet sich dadurch aus, dass die Steuereinheit eingerichtet ist, den erkannten fehlerhaften Messwert durch Mittelwertbildung über übertragene Messwerte weiterer, insbesondere räumlich benachbart angeordneter Sensoreinheiten, zu kompensieren,
Findet bei der Inbetriebnahme eines Gebäudetechniksystems eine fehlerhafte Zuordnung von Gebäudepositionen zu einem oder mehreren Aktoren des Gebäudetechniksystems statt, so kann dies durch die verteilt angeordneten Sensoreinheiten und die erfindungsgemäß ermittelte Messwertverteilung im Betrieb erkannt und korrigiert werden. Die Betätigung eines Aktors führt zu einer Veränderung der Messwertverteilung. Wenn diese zu den ursprünglich festgelegten Positionsdaten des Aktors nicht korrespondiert, kann auf eine fehlerhafte Positionsfestlegung des Aktors geschlossen werden.

Eine Ausführung des Beleuchtungssystems weist als Aktor eine Gebäudetechnikvorrichtung, insbesondere eine Heizungsvorrichtung, eine Klimavorrichtung, eine Fensteröffnungs- und Schließvorrichtung und/oder eine Beschattungsvorrichtung auf.

Ein weiteres Beleuchtungssystem eines Ausführungsbeispiels umfasst eine zentrale Steuereinheit, die bei einer Betätigung des Aktors eine Zuordnungsinformation des Aktors zu zumindest einer Sensoreinheit mittels der ermittelten Messwertverteilung erstellt oder zu verändert.

Ein bevorzugtes Beleuchtungssystem umfasst die Sensoreinheit dafür ausgelegt, den zumindest einen Messwert über ein Kommunikationsmittel des Beleuchtungssystems zu übertragen. Damit wird die Beleuchtungsinfrastruktur genutzt, um den Aufbau einer parallelen Sensorkommmunikationsinfrastruktur zu vermeiden und damit die Kosten für die Gebäudetechnikinfrastruktur insgesamt zu senken.

Eine Ausführung des Beleuchtungssystems umfasst die Sensoreinheit ausgebildet dafür, zumindest einen Messwert verknüpft mit einer Adressinformation der mit der den zumindest einen Messwert ermittelnden Sensoreinheit verbundenen Leuchtvorrichtung zu übertragen. Damit ist die Steuereinheit in der Lage, empfangenen Daten umfassend einen oder mehrere Messwerte einer bestimmten Leuchtvorrichtung zuzuordnen und somit direkt einer Positionsinformation der Leuchtvorrichtung und damit der Sensoreinheit zuzuordnen, an deren Position der Messwert ermittelt wurde.

Ein bevorzugtes Beleuchtungssystem zeichnet sich dadurch aus, dass die Steuereinheit eingerichtet ist, die empfangene Adressinformation des übertragenen zumindest einen Messwerts einer Positionsinformation der Leuchtvorrichtung, die die mit dieser Adressinformation verknüpfte Sensoreinheit umfasst, zuzuordnen.

Nachfolgend soll die Erfindung anhand von Ausführungsbeispielen und den beiliegenden Zeichnungen näher erläutert werden. Es zeigen:
- Figur 1: schematische Darstellung eines Beleuchtungssystems nach einem Ausführungsbeispiel der Erfindung,
- Figur 2: schematische Darstellung einer Leuchtvorrichtung zur Verwendung in einem Beleuchtungssystems nach einem Ausführungsbeispiel der Erfindung,
- Figur 3: schematische Darstellung einer Leuchtvorrichtung und deren Schnittstellen zur Verwendung in einem Beleuchtungssystems nach einem Ausführungsbeispiel der Erfindung,
- Figur 4: ein Verfahren zur Zuweisung einer Leuchtenadresse zu einer Position auf einem Gebäudeplan,
- Figur 5: eine grafische Darstellung einer erfindungsgemäß ermittelten Messwertverteilung über ein Gebäude am Beispiel einer Temperaturverteilungskarte, und
- Figur 6: eine grafische Darstellung einer Korrektur einer fehlerhaften räumlichen Sensor-Aktor-Zuordnung gemäß einem Ausführungsbeispiel der Erfindung.

Dabei zeigen in den Figuren gleiche Bezugszeichen dieselbe oder entsprechende Elemente. Zugunsten einer übersichtlichen Darstellung wird in der folgenden Beschreibung vorteilhafter Ausführungsbeispiele der erfindungsgemäßen Lehre auf eine Wiederholung weitgehend verzichtet.

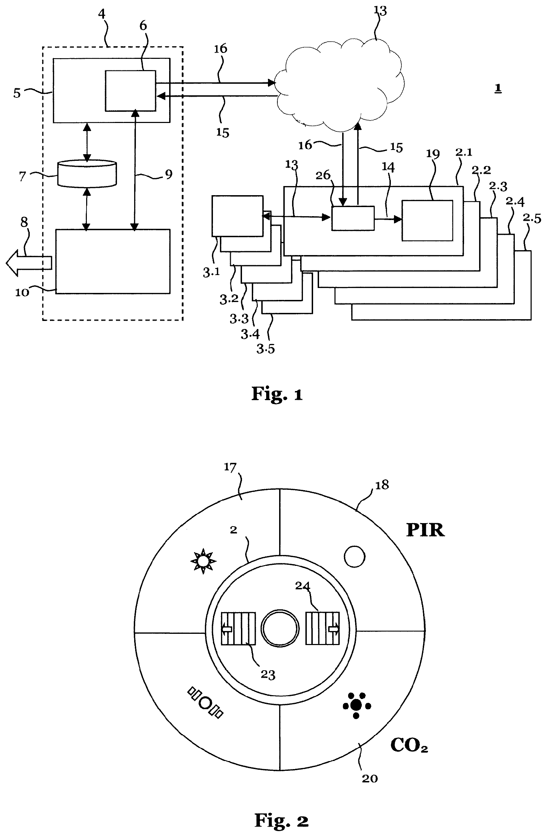

Figur 1 stellt eine Ausführung eines erfindungsgemäßen Beleuchtungssystems 1 dar.

Das Beleuchtungssystem umfasst eine Steuereinheit 4 und eine Vielzahl von Leuchtvorrichtungen 2.1, 2.2, .., 2.5, wobei die gezeigte Anzahl der Leuchtvorrichtungen 2.i nicht auf die in Figur 1 gezeigte Anzahl beschränkt ist.

Jede der Leuchtvorrichtungen 2.i verfügt über zumindest ein Lichtmodul 19 mit einem oder mehreren Leuchtmitteln, beispielsweise eine oder mehrere Leuchtröhren oder eine Anordnung einer oder mehrerer Leuchtdioden (LED). Weiter verfügt jede Leuchtvorrichtung 2.i über ein Betriebsgerät 26 (Ballast), beispielsweise eine LED-Treiberschaltung. Das Betriebsgerät 26 erzeugt ein Ansteuersignal 14 zur Ansteuerung des Lichtmoduls 19, so dass dieses Licht der gewünschten Eigenschaften, beispielsweise Lichtstärke, abgibt. Die Lichtabgabe des Lichtmoduls 19 wird über das Betriebsgerät 26 gesteuert, wobei die über das Netzwerk 13 mit dem Betriebsgerät 26 verbundene Steuereinheit 4 die dafür notwendigen Steuersignale 16 erzeugt und über das Netzwerk 13 an das Betriebsgerät 26 übermittelt. Die Steuereinheit 4 erhält von den einzelnen Leuchtvorrichtungen 2.i ebenfalls Signale 15, beispielsweise umfassend einen Status der Leuchtvorrichtungen 2.i betreffend, über das Netzwerk 13.

Die Steuereinheit 4 umfasst eine Lichtsteuereinheit 5 mit einem Schnittstellenmodul 6 für die Kommunikation zu den Leuchtvorrichtungen 2 und weiteren, in Figur 1 der Übersichtlichkeit halber nicht gezeigten Elementen des Beleuchtungssystems 1 wie z. B. Schaltern, Dimmern, Bewegungsmeldern. Die Zuordnung der einzelnen Elemente des Beleuchtungssystems 1 zueinander, also der Schalter eines Raums zu den in diesem Raum installierten Leuchtvorrichtung 2 kann über eine in einem Datenspeicher 7 abgelegte Beleuchtungszuordnungstabelle erfolgen. Diese Beleuchtungszuordnungstabelle umfasst unter anderem einander zugeordnet, Leuchtenaddresse und Positionsinformation der Leuchtvorrichtungen 2.i.

Die Lichtsteuereinheit 5 des Steuereinheit 4 führt die für die Lichtabgabe notwendigen Steuerungsaufgaben aus und kann für ein gesamtes Gebäude, für einen Teil eines Gebäudes ebenso wie für einen bestimmten Bereich außerhalb eines festen Gebäudes, z. B. einen Abschnitt eines öffentlichen Raums wie einen Stadtbezirk die Steuerungsaufgaben für die in diesem Bereich installierten Leuchtvorrichtung 2.i erfüllen.

Erfindungsgemäß ist die Vielzahl von Leuchtvorrichtungen 2.i jeweils mit einer Sensoreinheit 3.i räumlich zusammen angeordnet. Dabei kann die Sensoreinheit 3.1, 3.2, 3.3,..., 3.5 in der Leuchtvorrichtung 2.i angeordnet sein. Die Sensoreinheit 3.i kann an der Leuchtvorrichtung 2.i angebracht oder auch in der Nähe der Leuchtvorrichtung 2.i in einer getrennten Einheit angeordnet sein. Dabei ist nicht notwendigerweise jede Leuchtvorrichtung 2.i mit einer Sensoreinheit 3.i zusammen in dem auszuleuchtenden Bereich angeordnet.

Die Sensoreinheit 3.i ist über eine Sensorkommunikationsverbindung 11 mit dem Betriebsgerät 26 verbunden. Die Sensoreinheit 3.i misst zumindest einen Umgebungsparamter der Sensoreinheit 3.i und damit auch der Leuchtvorrichtung 2.i und übermittelt den Messwert (Sensordaten) über die Sensorkommunikationsverbindung 11 an das Betriebsgerät 26. Das Betriebsgerät 26 der Leuchtvorrichtung 2.i sendet den empfangenen Messwert über die das Netzwerk 13 an die Steuereinheit 4. Das Schnittstellenmodul 6 der Lichtsteuereinheit 5 empfängt die Messwerte (Sensordaten) der Vielzahl von Sensoreinheiten 3.i in dem Signal von dem Betriebsgerät 26 der einzelnen Leuchtvorrichtungen 2.i extrahiert die Messwerte und übermittelt sie an eine Sensorsteuereinheit 10.

Die Sensorsteuereinheit 10 der Steuereinheit 4 kann, muss aber nicht notwendigerweise, mit der Lichtsteuereinheit 6 gemeinsam angeordnet sein. Die einzelnen Elemente der Steuereinheit 4 können verteilt angeordnet sein, und beispielsweise über das Netzwerk 13 miteinander verbunden sein. Als Kommunikationsprotokoll für die einzelnen Elemente der Steuereinheit 4 kann beispielsweise ein Internetprotokoll insbesondere IPv6, genutzt werden.

Die Sensorsteuereinheit 10 ist eingerichtet in dem Datenspeicher 7 eine Sensorzuordnungstabelle zu speichern, zu lesen und zu verändern. Diese Sensorzuordnungstabelle umfasst eine Zuordnung einer Leuchtenadresse jeder Leuchtvorrichtung 2.i zu der jeweiligen Sensoreinheiten 3.i, die mit der Leuchtvorrichtung 2.i zusammen angeordnet ist. Ein von der Leuchtvorrichtung 2.i bzw. deren Betriebsgerät 26 über das Netzwerk übermittelter Messwert kann über die zusammen mit diesem Messwert übertragene Leuchtenadresse einer Leuchtenposition einerseits und einer mit der Leuchtenadresse verbundene Sensoreinheit 3.i zugeordnet werden. Damit ist über das für die Beleuchtung eingerichtete Netzwerk 13 eine Übermittlung von Messwerten (Sensordaten) ermöglicht, ohne dass ein paralleles Sensornetzwerk aufgebaut werden muss.

Die Sensorsteuereinheit 10 kann die Messwerte den einzelnen Sensoreinheiten 3.i zugeordnet in den Datenspeicher 7 speichern. Die gespeicherten Messwerte können für eine weitere Auswertung und Darstellung aus dem Datenspeicher 7 ausgelesen und als Messdaten 8 an Datenverarbeitungsanlagen übermittelt werden. Die mit dem erfindungsgemäßen Beleuchtungssystem 1 ermittelten ortsbezogenen Messdaten ermöglichen zahlreiche weitere Anwendungen, die im Folgenden kurz dargestellt werden.

Heute arbeiten die unterschiedlichen Gewerke in der Gebäudetechnik mit proprietären Anwendungen, Bussen und Kommunikationsprotokollen. Die bevorzugte Ausführung der Erfindung sieht vor, die Messwerte der Sensoreinheiten 3.i über ein einheitliches Kommunikationsprotokoll, insbesondere das Internetprotokoll IPv6, über das Netzwerk 13 zu übertragen (transportieren).

Ebenso ist es bevorzugt die übertragenen Messwerte und in einem standardisierten Format, insbesondere HTML5, in dem Datenspeicher 7 zu speichern. Vorteilhaft ist es, die Daten der Messwerte bei Bedarf in unterschiedliche Datenformate zu konvertieren und jeweils in konvertierter Form proprietären Lösungen zu Verfügung zu stellen.

In Figur 2 ist eine schematische Darstellung einer Leuchtvorrichtung 2.i zur Verwendung in einem Beleuchtungssystems nach einem Ausführungsbeispiel der Erfindung gezeigt.

Die Leuchtvorrichtung 2.i bindet über eine intelligente Schnittstelleinheit ein Zusatzmodul 14 mit einem CO₂-Sensor 20 als Bespiel für eine Sensoreinheit an. Damit ist über die intelligente Schnittstelleinheit beispielsweise eine Messwerterfassungsfunktion zusätzlich zu der Notlichtfunktion der Leuchtmittel 23, 24 zu realisieren. Die Daten des CO₂-Sensors 20 können über die intelligente Schnittstelleinheit und das Betriebsgerät oder auch direkt an eine Steuereinheit 4 übermittelt werden.

Erfindungsgemäße Leuchtvorrichtungen 2.i mit Zusatzmodulen mit jeweils einem integrierten CO₂-Sensor 20 können im Rahmen eines Notlichtsystems über das Gebäude verteilt sein. Entsprechend wird es möglich, über das entsprechend aufgerüstete Notlichtsystem eine CO2-Konzentration über das gesamtes Gebäude zu ermitteln, eine entsprechende CO₂-Verteilung ermitteln und für weitere Anwendungen zu Verfügung zu stellen. Diese weiteren Anwendungen können beispielsweise umfassen, auf Basis einer Auswertung der so ermittelten CO₂-Verteilung über das Gebäude im Brandfall Personen innerhalb des Gebäudes auf einen Fluchtweg mit der geringsten CO2-Konzentration zu leiten. Weiter wird es möglich, einem Einsatzleiter eines Rettungskräfteeinsatzes die Informationen für einen gezielten Einsatz von Atemschutzträgern bereitzustellen, indem die so ermittelte CO₂-Verteilung an einer geeigneten externen Schnittstelle bereitgestellt wird.

Die Information über die CO₂-(Rauch-) situation ist erfindungsgemäß somit auch über eine geeignete Sensoreinheit in der Leuchtvorrichtung 2.i zu erhalten. Da der CO₂-Sensor 20 aus einer lokalen detektierten erhöhten CO2-Konzentration nicht erkennen kann, woher das CO₂ kommt, ist eine Kombination der Ergebnisse mehrerer CO₂-Sensoren 20 in mehreren Leuchtvorrichtungen 2.i vorteilhaft. Bespielsweise können ensprechend ausgestattete Leuchtvorrichtungen 2.i jeweils ihre ermittelten CO₂-Messwerte an die Steuereinheit 4 übermitteln. Diese Steuerungseinheit 4 verfügt zusätzlich über die Positionsinformation der einzelnen Leuchtvorrichtungen 2.i. Diese Positionsinformation ist beispielsweise entweder manuell eingepflegt oder im Rahmen der Initialisierung (Addressierung) der einzelnen Leuchtvorrichtungen 2.i über ein Verfahren zur Positionsermittlung automatisch erzeugt worden. Die Steuereinheit 4 ermittelt aus der Positionsinformation und den Messdaten der Leuchtvorrichtungen 2.i eine CO₂-Verteilung in einem Gebäude. Basierend auf dieser Information können Laserdioden der erfindungsgemäßen Leuchtvorrichtungen 2.i angesteuert und Personen auf einem Fluchtweg mit der geringsten CO2-Konzentration in sichere Bereiche geleitet werden.

Umfasst die Sensoreinheit 3 den CO₂-Sensor und werden als Messwerte erhöhte CO₂-Messwerte gemessen und an die Steuereinheit 4 übermittelt, so kann die Steuereinheit 4 automatisch Aktoren wie z. B. eine Lüftung und/oder eine Fenstersteuerung starten, um mittels Frischluft die Luftqualität automatisch auf einem vorgegebenen Niveau zu halten. Gegenüber zeitgesteuerten Fenstersteuerungen ist stets die beste Luftqualität garantiert, unnötiges Heizen im Sommer oder Auskühlen des Raums im Winter wird verhindert.

Ebenso ist ein als Sensoreinheit 3 eingesetzter CO₂-Sensor für die Feuerprävention nutzbar. Werden als Messwerte erhöhte CO₂-Messwerte gemessen und an die Steuereinheit 4 übermittelt, so kann die Steuereinheit 4 automatisch, insbesondere z.B. in Verknüpfung mit Messwerten für hohe Umgebungstemperaturen eines zusätzlichen Temperatursensormoduls 17, kann auf ein Feuer geschlossen werden. Über das Beleuchtungssystem kann eine Alarm-SMS und/oder ein Notruf an den Gebäudeverwalter sowie die Feuerwehr abgesetzt werden. Personen, die sich über mobiles Kommunikationsgerät im Gebäude angemeldet haben, können ebenfalls eine Warnung erhalten.

Mittels der übertragenen Messwerten und der Verknüpfung mit der Positionsinformation kann die Steuereinheit 4 automatisch eine Brand- bzw. Rauchkarte des gesamten Gebäudes erstellen. Diese Brand- bzw. Rauchkarte wird von der Steuereinheit 4 einer Ausführung des Beleuchtungssystems automatisch zur Feuerwehr übermittelt. Damit wird eine zügige Analyse, wo sich die Brandherde befinden und, bei der ergänzenden Verwendung von Präsenzsensoren 18, wo Personen gefährdet sind, ermöglicht. Mit dieser Brand- bzw. Rauchkarte kann die Brandbekämpfung und Personenrettung optimiert schnell durchgeführt werden. Als Präsenzsensoren 18 können beispielsweise PIR-Sensoren oder Ultraschallsensoren genutzt werden.

Weiter ist die Steuereinheit 4 einer Ausführung ausgelegt, eine dynamische Fluchtweganzeige zu verwirklichen. Auf Grundlage einer erfindungsgemäß erzeugten CO₂-Karte des Gebäudes kann die Steuereinheit 4 Brandherde in dem Gebäude lokalisieren und damit eine dynamische Fluchtweganzeige entsprechend ansteuern. Damit können Personen je nach Brandsituation dynamisch aus dem Gebäude geleitet werden. Auch können diese Informationen zu Fluchtwegen drahtlos an eine Notfallanwendung auf mobile Geräte von Personen gesendet werden, die sich innerhalb des Gebäudes aufhalten.

Liegen der Steuereinheit 4 zusätzlich außerdem Präsenzinformationen vor, z. B. durch einen Präsenzsensor 18 oder ein Kamerasensormodul ermittelt, können Menschenströme zusätzlich so geleitet werden, dass keine Massenpanik entsteht.

Ähnlich wie in der Notfall-Anwendung, können durch Präsenzsensormodule 18 übermittelte Präsenzinformationen in Verbindung mit der Positionsinformation der Leuchtvorrichtungen 2 auch genutzt werden, um Kundenströme innerhalb eines Ladenlokals zu analysieren und darauf aufbauend ein Präsentationskonzept anzupassen. Die mit dem erfindungsgemäßen Beleuchtungssystem 1 ermittelten Daten sind daher besonders vorteilhaft, da sie nicht bei einem Test einmalig ermittelt werden und daher nicht repräsentativ sind. Stattdessen werden die Daten laufend im Betrieb ermittelt.

Die CO₂-Landkarten können verwendet werden, um Brandherde zu lokalisieren und damit eine dynamische Fluchtweganzeige anzusteuern. Damit können Personen je nach Brandsituation dynamisch aus dem Gebäude geleitet werden. Auch können diese Informationen drahtlos an eine Notfallanwendung auf einem mobilen Kommunikationsgerät gesendet werden (Smartphone). Liegen außerdem Präsenzinformationen vor, z.B. durch Präsenzsensoren 18, können Menschenströme zusätzlich gezielt geleitet werden, so dass keine Massenpanik entsteht.

Die Leuchtvorrichtung 2.i in Figur 2 bindet über eine intelligente Schnittstelleinheit des Betriebsgeräts einen Präsenzsensor 18 an. Damit ist über die intelligente Schnittstelleinheit beispielsweise eine Erkennung der Anwesenheit von Personen im Erfassungsbereich des Präsenzsensors 18 zusätzlich zu der Notlichtfunktion der Leuchtmittel 23, 24 verwirklicht. Die Daten des Präsenzsensors 18 können über die intelligente Schnittstelleinheit und das Betriebsgerät der Leuchtvorrichtung 2.i an die Steuereinheit 4 übermittelt und dort ausgewertet werden.

Einem Notlichtsystem ist in der Regel die räumliche Position der einzelnen Notleuchten im Gebäude bekannt. Die Benutzung von Präsenzsensoren 18 in Verbindung mit den Leuchtvorrichtungen 2.i ermöglichen eine gezielte Ansteuerung von Allgemeinleuchten ohne für die Allgemeinbeleuchtung eine getrennte Steuerinfrastruktur schaffen zu müssen.

Die in Figur 2 dargestellte Leuchtvorrichtung 2.i zeigt weiter ein Temperaturmessmodul 17, das über einen Messwertgeber zur Ermittlung einer Umgebungstemperatur verfügt. Die gemessenen Temperaturmesswerte werden über das Betriebsgerät 26 der Leuchtvorrichtung 2.i an die Steuereinheit 4 übermittelt. Das Temperaturmessmodul 17 kann in einem einfachen Ausführungsbeispiel der Leuchtvorrichtung 2.i eine Temperaturüberwachung zur Überwachung einer Betriebstemperatur der Leuchtvorrichtung 2.i selbst sein, die für die Erfassung einer Umgebungstemperatur der Leuchtvorrichtung 2.i über eine geeignet ausgebildete Kalibrierung verfügt. Da erfindungsgemäß eine Vielzahl von Leuchtvorrichtungen 2.i zusammen mit Sensoreinheiten 3 in einem Gebäude angeordnet ist, wird die geringe Genauigkeit eines einzelnen Temperaturmessmoduls 17 durch die Vielzahl von Messwerten der Vielzahl von verfügbaren Temperaturmessmodulen ausgeglichen. Bei Ausfall eines Temperaturmessmoduls 17 stellen die Temperaturmessmodule 17 benachbart angeordneter Leuchtvorrichtungen 2 Temperaturmesswerte bereit, die es der Steuereinheit 4 ermöglichen einen Temperaturwert auch für die Position des ausgefallenen Temperaturmessmoduls 17 zu ermitteln. Damit ist, beispielsweise über eine Mittelwertbildung, insbesondere über eine, eine räumliche Entfernung zu dem ausgefallenen Temperaturmessmodul 17 berücksichtigende Mittelwertbildung, eine Kompensation eines ausgefallenen Temperaturmessmoduls 17 möglich.

Erfindungsgemäß mit dem Beleuchtungssystem 1 integrierte Temperaturmessmodule 17 können die räumliche Temperaturverteilung und zeitlichen Temperaturverläufe in einem Gebäude ermitteln. Beispielsweise ist in Notleuchten mit Lithium-Ionen-Batterien bereits üblicherweise ein Temperatursensor integriert. Hier kann entweder in der Leuchtvorrichtung 2.i integrierte Elektronik automatisch die Eigenerwärmung der Leuchtvorrichtung 2 herausrechnen und so die Umgebungstemperatur ermitteln. Alternativ kann die Steuereinheit 4 eine entsprechende Anpassung des übermittelten Messwerts vornehmen.

Die Steuereinheit 4 erzeugt aus diesen Daten automatisch eine Messwertverteilung, insbesondere in Form einer Messwertkarte. Diese erlaubt es einem Gebäudeverwalter, zügig Betriebsgrößen der installierten Heizungs- und Klimaanlage zu ermitteln und entsprechend zu optimieren.

Gemäß einer Ausführung der Erfindung wird vor der Installation einer Heizungs-Lüftungs-Klimatisierungs- (HLK-) Anlage in der Bauphase das Beleuchtungssystem nach einer Ausführung der Erfindung genutzt, um die Eigenheiten des Gebäudes mittels positionsgenauer Messung wichtiger Parameter wie Temperatur, Zug,... zu ermitteln, um darauf aufbauend die HLK- Anlage gebäudespezifisch optimal auszulegen.

Neben der manuellen Optimierung durch den Gebäudeverwalter ist auch eine automatische Optimierung möglich. Die Steuereinheit 4 oder eine externe Auswerteinheit analysiert die übertragenen Messwerte, ermittelt optimierte Parameter für das HLK- System und sendet diese Parameter über ein standardisiertes Kommunikationsprotokoll, z.B. IPv6, zum Heizungs-/Lüftungssystem.

Mittels der unterschiedlichen Sensoreinheiten 3.i, die in den Leuchtvorrichtungen 2.i oder in einem engen räumlichen Umfeld der Leuchtvorrichtungen 2.i angeordnet sind, sind weitere vorteilhafte Anwendungen des erfindungsgemäßen Beleuchtungssystems 1 zu verwirklichen.

Mittels der Sensordaten kann die Software automatisch eine Brand- bzw. Rauchkarte des gesamten Gebäudes erstellen. Diese Brand- bzw. Rauchkarte können automatisch zur Feuerwehr übermittelt werden. Die Feuerwehr sieht damit auf den ersten Blick, wo sich die Brandherde befinden und wo sich, bei Verwendung von Präsenzsensoren 18, gefährdete Personen aufhalten. Mit diesen Karten kann die Brandlöschung und Personenrettung optimiert und beschleunigt durchgeführt werden.

Die Sensoreinheit 3.i ist in Figur 2 anhand des Temperaturmessmoduls 17, des Präsenzsensormoduls 18 und des CO₂-Messmoduls 20 diskutiert. Alternativ oder zusätzlich kann die Sensoreinheit 3.i einen Rauchmelder, einen Brandwarnsensor, einen Gassensor, einen Feuchtigkeitssensor oder einen anderen, einen beliebigen Umgebungsparameter der Leuchtvorrichtung 2.i messenden Sensor umfassen.

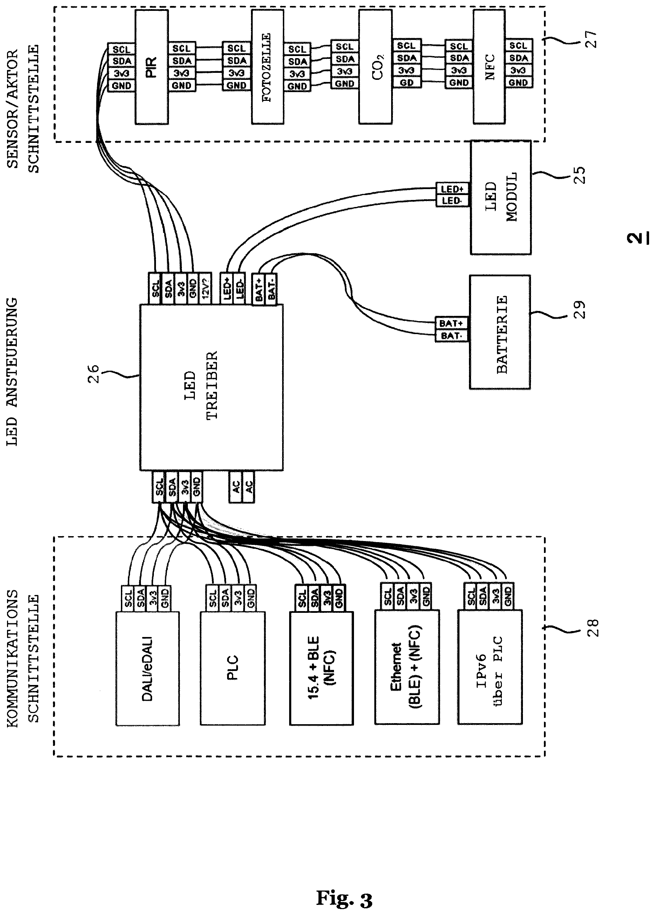

In Figur 3 werden wesentliche Funktionsblöcke der Leuchtvorrichtung 2.i dargestellt.

Die Leuchtvorrichtung 2.i weist ein LED-Modul 25 für die primäre Beleuchtungsfunktion der Leuchtvorrichtung 2.i auf. Die Leuchtvorrichtung 2.i kann ein Notlicht sein, so dass die Leuchtvorrichtung 2.i weiter über eine Batterie 29 verfügt, um einen Betrieb auch für einen Ausfall der Netzversorgung der Leuchtvorrichtung 2.i zu gewährleisten. Ein Betriebsgerät 26 der Leuchtvorrichtung 2.i steuert das LED-Modul 25 an. Das Betriebsgerät 26 stellt eine Schnittstelle zur externen Stromversorgung bereit, gewährleistet die galvanische Trennung zwischen der primären Netzspannungsseite einerseits und der sekundären Niederspannungsseite zu Batterie 29 und LED-Modul 25 andererseits. Das Betriebsgerät 26 kann ebenso eine Dimmfunktion durch eine geeignete Ansteuerung des LED-Moduls 25 verwirklichen. Einen einzustellenden Dimmwert erhält das Betriebsgerät 26 über eine Kommunikationsschnittstelle 28. Die Kommunikationsschnittstelle 28 der Leuchtvorrichtung 2.i ist in Figur 3 mit einer Vielzahl unterschiedlicher Kommunikationsstandards für die Kommunikation dargestellt. Für die erfindungsgemäße Leuchtvorrichtung 2.i ist die Kommunikation nach zumindest einem der in Figur 3 gezeigten Kommunikationsstandards oder einem entsprechenden, in der Figur 3 nicht zeichnerisch dargestellten Standard wesentlich.

Beispiele für Übertragungsprotokolle der Kommunikationsschnittstelle 28 umfassen eine DALI (engl. Digital Adressable Lighting Interface) oder eDALI-Schnittstelle, eine PLC-Schnittstelle (engl.: Power Line Communication), eine IPv6-Schnittstelle, eine Ethernet-Schnittstelle, eine Nahbereichskommunikationsschnittstelle wie NFC, eine WPAN 802.15.4-Schnittstelle wie ZigBee, eine 802.15.1- Schnittstelle (Bluetooth™, Bluetooth Low Energy-BLE).

Die erfindungsgemäße Leuchtvorrichtung 2.i umfasst weiter eine Sensor/Aktor-Schnittstelle 27. In Figur 3 ist die Sensor/Aktor-Schnittstelle 27 über das Betriebsgerät 26 sowohl mit einer Spannungsversorgung als auch mit der Kommunikationsschnittstelle 28 verbunden. Über die Sensor/Aktor-Schnittstelle 27 werden zum einen Sensoreinheiten 3.i und Aktoren mit der notwendigen Betriebsspannung versorgt. Zum anderen werden Steuersignale an Sensoren und Aktoren übermittelt, die das Betriebsgerät 26 über die Kommunikationsschnittstelle 28 erhält.

Im Rahmen des erfindungsgemäßen Beleuchtungssystems erhält das Betriebsgerät 26 über die Sensor/Aktor-Schnittstelle 27 Messwerte von über die Sensor/Aktor-Schnittstelle 27 angebundenen Sensoreinheiten 3.i. Die empfangenen Messwerte werden von dem Betriebsgerät 26 über die Kommunikationsschnittstelle 28 zu dem Netzwerk 13 an das Steuereinheit 4 übertragen. Das in Figur 3 gezeigte Betriebsgerät 26 ist dazu eingerichtet, die empfangenen Messwerte der Sensoreinheiten 3.i in geeignete Datenformate für die Übertragung über die Kommunikationsschnittstelle 28 umzusetzen und über die Kommunikationsschnittstelle 28 zu übermitteln.

Alternativ oder zusätzlich kann die Leuchtvorrichtung 2.i über entsprechend ausgelegte Schaltungen oder entsprechend programmierte Prozessoren verfügen, um die Messwerte der Sensoreinheiten 3.i über die Sensor/Aktor-Schnittstelle 27 zu empfangen und über die Kommunikationsschnittstelle 28 an das Steuereinheit 4 zu übermitteln.

Gezeigt ist in Figur 3 eine Leuchtvorrichtung 2.i, die über eine Schnittstelle 28 für extern zu der Leuchtvorrichtung 2.i angeordnete Sensoreinheiten 3.i verfügt. Alternativ oder zusätzlich kann die Leuchtvorrichtung 2.i über intern angeordnete Sensoreinheiten 3.i verfügen. Die Sensoreinheit 3 kann alternativ oder zusätzlich auch durch eine Betriebstemperaturüberwachung der Leuchtvorrichtung 2.i oder auch des Betriebsgeräts 26 realisiert sein. Die Sensor/Aktor-Schnittstelle 27 der Leuchtvorrichtung 2.i kann beispielsweise über einen internen Leuchtenbus in der Leuchtvorrichtung 2.i realisiert werden, die Sensoreinheiten 3.i sind damit unmittelbar in die Leuchtvorrichtung 2.i zu integrieren.

Alternativ oder zusätzlich kann die Leuchtvorrichtung 2.i über die Sensor/Aktor-Schnittstelle 27 Aktoren ansteuern und diesen Aktoren geeignete Ansteuersignale übermitteln. Beispielsweise kann die Leuchtvorrichtung 2.i über die Sensor/Aktor-Schnittstelle 27 eine Klimagerät ansteuern, einen Heizkörper regeln, einen Fensteröffnungs- und Schließmechanismus steuern, eine Abschattungsvorrichtung für ein Fenster ansteuern.

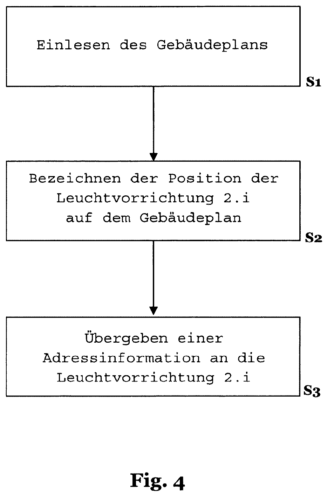

Anhand des Ablaufdiagramms in Figur 4 wird ein Verfahren zur erfindungsgemäßen Verknüpfung von Sensordaten mit lokaler Positionsinformation dargestellt. Die Sensordaten können als anschließend als standardisierte Sensor-Landkarten anderen Gewerken zur Verfügung gestellt werden. Damit kann ein Lichtmanagementsystem unabhängig von seiner primären Funktion "Beleuchtung" mit einer sekundären Zusatzfunktion für das gesamte Gebäudemanagement ausgestattet werden.

Bekannt ist, eine Sensoreinheit 3.i oder eine Leuchtvorrichtung 2.i mit einer integrierten Sensoreinheit 3.i mit ihrer lokalen Positionsinformation zu versehen. Hierzu werden die Schritte Adressieren der Sensoreinheit mit einer abstrakten Nummer, Importieren eines Gebäudeplans, logische Zuordnung der Adresse mit einer Position im Gebäudeplan ausgeführt.

Für die Ausführung der Erfindung wird nach Figur 4 hingegen bevorzugt ein manuelles Ermitteln und Zuweisen der Positionsinformation während der Installation der Sensoreinheit 3.i in einer Leuchtvorrichtung 2.i vorgeschlagen.

Das anhand Figur 4 gezeigte Verfahren umfasst zunächst den Schritt S1 des Einlesens (Importieren) des Gebäudeplans in ein Anwendungsprogramm zur Initialisierung (Kommissionierung) von Einheiten der Beleuchtungstechnik. Anschließend wird in Schritt S2 die Position der Leuchtvorrichtung 2.i oder der Position der Sensoreinheit 3.i auf dem Gebäudeplan bezeichnet. In einem dritten Schritt S3 wird eine Adressinformation an die Leuchtvorrichtung 2.i, beispielsweise mittels NFC-Kommunikation, übergeben.

Ein Betriebsgerät 26 der Leuchtvorrichtung 2.i kann eine NFC-Kommunikationsfunktion (NFC - Nahbereichsfunkkommunikation: engl.: Near Field Communication) aufweisen. Hierzu wird ein NFC-Modul in der Leuchtvorrichtung 2.i verwendet. Damit ist die Leuchtvorrichtung 2.i über eine NFC-Verbindung zu konfigurieren und zu adressieren.

Die Adressinformation der Leuchtvorrichtung 2.i wird von der Leuchtvorrichtung 2.i, insbesondere deren Betriebsgerät 26 an ein mobiles Bediengerät für die Kommissionierung übergeben. Dies kann mittels einer Nutzereingabe oder bevorzugt über eine drahtlose Verbindung automatisch erfolgen.

Adressiert ein Nutzer die Leuchtvorrichtung 2.i mit dem mobilen Bediengerät, z.B. einem Smartphone oder einem transportablen Computer, das ebenso wie die Leuchtvorrichtung 2.i über eine NFC-Kommunikationsfunktion verfügt, so kann der Nutzer auf einem Gebäudeplan in einem auf dem mobilen Bediengerät installierten Anwendungsprogramm manuell die Position der Sensoreinheit 3.i oder der mit einer Sensoreinheit 3.i ausgestatteten Leuchtvorrichtung 2.i angeben. In einer Ausführung der Erfindung wird der Gebäudeplan als Datei in einem Dateiformat wie ".PDF" importiert oder aber manuell skizziert. Der Nutzer kann mittels Geste die Position in dem Gebäudeplan bezeichnen, an der sich die Leuchtvorrichtung 2.i und die Sensoreinheit 3.i befinden.

Optional können auch Positionsdaten als kartesische Koordinaten (x, y) an das Betriebsgerät 26 der Leuchtvorrichtung 2.i übermittelt werden. Damit kann das Betriebsgerät 26 alternativ oder zusätzlich einen Messwert in Verbindung mit Positionsdaten, beispielsweise den kartesischen Koordinaten, an das Steuergerät 4 übertragen.

Das Anwendungsprogramm speichert einen Datensatz umfassend die Adressinformation der Leuchtvorrichtung 2.i gemeinsam mit der bezeichneten Position der Leuchtvorrichtung 2.i. Insbesondere liest das Anwendungsprogramm die Leuchtenadresse und die Positionsinformation der Leuchtvorrichtung 2.i ein und erstellt ausgehend von diesem und weiteren Datensätzen für weitere Leuchtvorrichtungen 2.i eine Zuordnungstabelle. Diese Zuordnungstabelle wird in dem Datenspeicher 7 gespeichert. Dieses Verfahren ermöglicht die automatische Erzeugung einer räumlichen Abbildung des Beleuchtungssystems 1 über dem Gebäudeplan. Alle Leuchtvorrichtungen 2.i sind nun über ein grafisches Anlagenbild anzusteuern. Zugleich ist damit eine grafische Darstellung des räumlichen Sensornetzwerks bestehend aus den Sensoreinheiten 3 über das Gebäude erstellt und in dem Datenspeicher 7 verfügbar.

Alternativ oder zusätzlich können die Positionsdaten automatisch ermitteln werden. Hierzu ermittelt während der Installation (Kommissionierung) ein entsprechendes mobiles Bediengerät mit einer Lokalisierungsfunktion automatisch seine eigene Position in einem Gebäude, wenn es sich in der Nähe der zu installierenden Leuchtvorrichtung 2.i und der Sensoreinheit 3.i befindet. Die ermittelte Position wird in Form von Positionsdaten dann an die Leuchtvorrichtung 2.i übertragen. Diese Lokalisierungsfunktion ist mittels eines beliebigen Positionierungsverfahrens, das insbesondere für die Lokalisierung innerhalb von Gebäuden ausgelegt ist, zu realisieren. Möglich ist dies z.B. mittels sogenannte Mikro-Elektro-Mechanischen Systemen (MEMS-Sensoren), z.B. Beschleunigungssensoren, Gyroskope... auf Mikroelektronikbasis, die, ausgehend vom letzten verfügbaren Navigationssignal eines satellitengestützten Navigationssystems, die Position des mobilen Bediengeräts im Raum ermitteln können. Auch in dem diskutierten Verfahren wird ausgehend von diesem und weiteren Datensätzen für weitere Leuchtvorrichtung 2.i eine Zuordnungstabelle erstellt. Diese Zuordnungstabelle wird in dem Datenspeicher 7 gespeichert.

Die Zuordnungstabelle (Beleuchtungszuordnungstabelle) ermöglicht zugleich mit der Sensorzuordnungstabelle umfassend eine Zuordnung einer Leuchtenadresse jeder Leuchtvorrichtung 2.i zu der jeweiligen Sensoreinheit 3.i, die mit der Leuchtvorrichtung 2.i zusammen angeordnet ist, die eindeutige räumliche Zuordnung jedes mit einer Leuchtenadresse übermittelten Messwerts.

Ein von der Leuchtvorrichtung 2.i bzw. deren Betriebsgerät 26 über das Netzwerk übermittelter Messwert kann über die zusammen mit diesem Messwert übertragene Leuchtenadresse einer Leuchtenposition einerseits und einer mit der Leuchtenadresse verbundene Sensoreinheit 3.i, also auch einer Sensorposition, zugeordnet werden, und damit auch entsprechend ausgewertet und dargestellt werden.

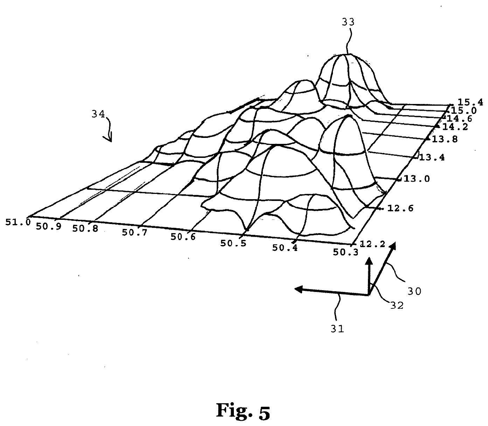

In Figur 5 wird eine erfindungsgemäße Darstellung der ortsbezogenen Messwertverteilung gezeigt. Eine mögliche Darstellung ist die Form einer Temperaturverteilungskarte, bei der kritische Sensordaten, z.B. erhöhte CO₂-Werte, erhöhte Lärmbelastung oder bestimmte Temperaturbereiche als Flächen in einer bestimmten Farbe oder mit einem bestimmten Muster dargestellt werden. Benutzerabhängig können für verschiedene Stufen Farben vergeben werden, so dass eine intuitiv wahrnehmbare Darstellung der übermittelten Messwerte der Sensoreinheiten 3.i erzeugt wird.

Die in Figur 5 gezeigte erfindungsgemäße Darstellung der erzeugten Messwertverteilung ist in der Form einer Landkarte in der von der x-Achse 30 und der γ-Achse 31 aufgespannten Ebene eines Gebäudeplans gegeben. Jeder Messwert wird entsprechend seinem Wert in z-Richtung 32 aufgetragen. Je höher ein übermittelter Messwert in Richtung der z-Achse 32 ist, desto höher ist der Punkt in der Landkarte über der Grundfläche. Die Koordinate an der ein Messwert aufgetragen ist, wird durch die Position der den Messwert ermittelnden Sensoreinheit 3.i in der x-y-Ebene der Messwertkarte bestimmt. So entstehen Messwert-Berge 33 und Messwert-Täler 34. Ein Berg einer Temperaturverteilung als Beispiel für eine Messwertverteilung im Raum würde z.B. erhöhte Temperaturen an dieser Position anzeigen. Ein Nutzer des erfindungsgemäßen Beleuchtungssystems oder ein entsprechend ausgelegtes automatisch laufendes Steuerprogramm kann auf Grundlage der erzeugten Messwertkarte die Klimaanlage des Gebäudes optimieren.

Aus der in Figur 5 dargestellten Temperaturverteilung lässt sich z. B. entnehmen, dass ein zentraler Heizungskreis stark heizt. An den Randbereichen der in Figur 5 dargestellten Temperaturverteilung ist eine deutlich geringere Temperatur, möglicherweise aufgrund einer kühlenden Fensterfront erkennbar. Aus der intuitiv begreifbaren Darstellung in Figur 5 lassen sich für den Nutzer des Gebäudes eine manuelle Nachjustierung des zentralen Heizungskreises oder automatisches Nachregeln ableiten, ebenso ist im Bereich der Fensterfront ein Hochregeln der Heizung, eine Verbesserung der Dichtung oder Ersatz der Fenster als mögliche Maßnahmen aus der Darstellung der Messwertverteilung in Figur 7 ableiten.

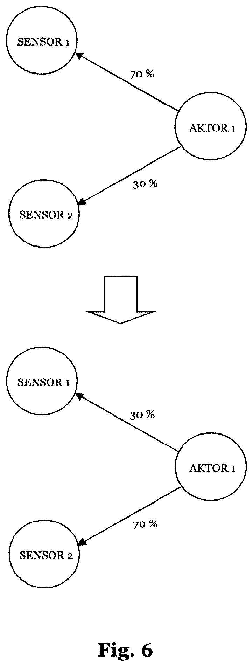

Fig. 6 zeigt eine Korrektur einer fehlerhaften räumlichen Sensor-Aktor-Zuordnung eines Gebäudetechniksystems gemäß einem Ausführungsbeispiel der Erfindung.

Für Gebäudetechniksysteme müssen Sensoren im Rahmen der Installation und Inbetriebnahme in der Regel manuell den entsprechenden Aktoren zugeordnet werden. Das erfindungsgemäße Beleuchtungssystem 1 ermöglicht, diesen Vorgang zu automatisieren. Hierzu wird der Gebäudeplan in einem geeigneten Datenformat von einem Inbetriebnahmeprogramm direkt eingelesen oder zunächst in ein geeignetes Datenformat konvertiert und anschließend eingelesen. Die Software erkennt also, welche Aktoren, z.B. Leuchtvorrichtungen 2.i, aber auch Heizung, Fensteröffner, Jalousien, sich in der Nähe von welchen Sensoreinheiten 3.i, z. B. Temperatursensoren, befinden und weist diesen Sensoreinheiten 3.i dann den benachbart angeordneten Aktoren automatisch zu.

In Figur 6 ist ein Ausführungsbeispiel gezeigt, in dem das Gebäudetechniksystem dynamisch und/oder selbstlernend ist. Die Software überwacht stets die Funktionsweise des zu überwachenden Gewerks (z.B. eine Heizung). Wird das Optimum nicht erreicht, wird die Zuweisung Sensor-Aktor dynamisch geändert.

In der oberen Teilfigur 6 ist eine Ausgangssituation für die Sensor-Aktor-zuweisung eines Gebäudetechniksystems gezeigt. Der Aktor A1, z. B. eine Heizung, ist zu 70 % dem Temperatursensor S1 und zu 30 % dem Temperatursensor S2 zugeordnet. Der Temperatursensor S1 meldet im vorliegenden Fall eine Raumtemperatur mit einem Messwert von z. B. 18°C. Der Temperatursensor S2 meldet im gezeigten Fall eine Raumtemperatur mit einem Messwert von 25°C. Es wird nun trotz Betätigung einer Heizung eine gewünschte Raumtemperatur nicht erreicht. Der Grund dafür ist, dass die Zuordnung Sensor-Aktor wie bei Inbetriebnahme vorgenommen und in der oberen Teilfigur 8 gezeigt, nicht korrekt ist. Die Heizung liegt näher zu Temperatursensor 2 als zu Temperatursensor 1. Aufgrund der Auswertung eines zeitlichen Verlaufs der Messwertverteilung für die Temperatur ist die fehlerhafte Zuordnung erkennbar und die Steuereinheit 4 ändert die entsprechende Zuordnung von Sensoreinheiten S1, S2 zu Aktor A1 gemäß der unteren Teilfigur 6. In der unteren Teilfigur 6 ist der Aktor A1 (Heizung) zu 30 % dem Temperatursensor S1 und zu 70 % dem Temperatursensor S2 zugeordnet. Die positionsgenaue Zuordnung der Sensoreinheiten 3 ermöglicht also eine nachträgliche Anpassung einer fehlerhaften Zuordnung von Sensoreinheiten 3 zu Aktoren und ermöglicht somit die Verwirklichung eines selbstlernenden Gebäudetechniksystems.

Das erfindungsgemäße Beleuchtungssystem 1 mit den Leuchtvorrichtungen 2.i zugeordneten Sensoreinheiten 3.i realisiert mit einfachen Mitteln ein verteiltes Sensornetzwerk. Bei bekannten Sensorsystemen wird üblicherweise ein zentraler Sensor verwendet. Dieser Sensor muss mit einer entsprechend hohen Genauigkeit und Zuverlässigkeit Messwerte erfassen und ist daher teuer.

In einem erfindungsgemäßen verteilten Sensorsystem können Sensoreinheiten 3.i mit geringerer Messgenauigkeit und daher entsprechend kostengünstigere Sensoren eingesetzt werden. Die Steuereinheit 4 eines Ausführungsbeispiels nutzt statistische Verfahren, um aus den mit der jeweiligen Positionsinformation verknüpften, übertragenen Messwerten genaue Sensordaten einer höheren Genauigkeit zu ermitteln. Die Steuereinheit 4 nutzt beispielsweise ein Verfahren zur Mittelung der Messwerte mehrerer benachbarter Sensoreinheiten 3.i zur Erzeugung eines Messwerts höherer Genauigkeit als die übertragenen Messwerte aufweisen.

Die Steuereinheit 4 einer Ausführung ist ausgelegt, extreme Messwerte automatisch herauszufiltern, wenn diese nicht über die Messwerte unmittelbar benachbarter Sensoreinheiten 3.i bestätigt werden. Damit ist die Steuereinheit 4 in der Lage auf eine fehlerhaft funktionierende Sensoreinheit 3.i zu schließen und diese zu identifizieren. Die Steuereinheit 4 kann zu diesem Zweck einen Vergleich der übertragenen Messwerte und mit der Positionsinformation der Sensoreinheit 3.i mit einer Gauss-Verteilung oder einem Schwellwert ausführen.

Mittels des erfindungsgemäßen Beleuchtungssystems 1 ist ein weitgehend redundantes Sensorsystem zu verwirklichen, in dessen Rahmen das Beleuchtungssystem 1 übermittelte fehlebehafte Messwerte durch die Messwerte benachbarter Sensoreinheiten 3.i kompensiert. Bei bekannten Sensorsystemen ist hingegen bei Ausfall eines einzigen Sensors ein ganzer Bereich nicht mehr zu erfassen und damit auch nicht mehr zu regeln. Die Steuereinheit 4 eines Ausführungsbeispiels ist dafür eingerichtet, mittels eines dynamischen statistischen Verfahrens einen Messwert einer ausgefallenen Sensoreinheit 3.i durch einen rechnerisch ermittelten Wert auf Basis der übertragenen Messwerte der benachbarter Sensoreinheiten 3.i zu kompensieren. Ermöglicht wird dies durch die erfindungsgemäße Verknüpfung der Positionsinformation der Leuchtvorrichtung 2.i mit den jeweiligen übertragenen Messwerten.

Die erfindungsgemäße Steuereinheit 4 kann damit auf Basis einer Vielzahl ungenauer und damit kostengünstiger Sensoreinheiten 4 einen genauen virtuellen Sensor erzeugen, der ein gesamtes Gebäude abdeckt und redundant und ausfallsicher Messwerte erfassen und bereitstellen kann.

Vorstehend wurde die Erfindung anhand eines Beleuchtungssystems für den Innenbereich eines Gebäudes dargestellt. Ebenso vorteilhaft ist die Erfindung im Außenbereich einsetzbar.

So kann das Beleuchtungssystem im Außenbereich Straßenleuchten als Leuchtvorrichtungen 2.i integrierte Sensoreinheiten 3.i umfassen. Die eingesetzten Sensoreinheiten 3.i sind dafür ausgelegt, Fahrzeuge, Radfahrer und Fußgänger zu erfassen. Damit kann die Steuereinheit 4 Ampeln schalten und somit einen Verkehrsfluss optimieren. Ist das System mit dem Internet auf Grundlage des IPv6-Kommunikationsprotokolls verbunden, können bei Staus auch Alternativ-Routen an Navigationsgeräte unter Nutzung einer Infrastruktur-zu-Fahrzeug-Kommunikation gesendet werden.

Ebenso sind die entsprechend ermittelten Messwertkarten dazu verwendbar, die Wirkung neuer Straßenbauten zu analysieren, z.B. die Entschärfung von Staus durch eine zusätzliche Fahrbahn oder durch einen neuen Kreisverkehr.

Weiter ist das erfindungsgemäße Beleuchtungssystem 1 dafür einsetzbar, Gebäudestrukturen in Hinblick auf Erdbeben zu überwachen. Dafür sind insbesondere als MEMS-Sensoren (Mikro Elektro-Mechanisches System) ausgebildete Beschleunigungssensoren und/oder Gyroskope als Sensoreinheiten 3 einzusetzen. Die Sensoreinheiten 3.i können geringfügige Bewegungen in der Gebäudestruktur ermitteln. Durch das über das Gebäude, insbesondere ein Hochhaus, verteilte Beleuchtungssystem 1 können trotz kostengünstiger Sensoreinheiten 3.i sehr genaue Messwerte ermittelt und positionsgenau zugeordnet werden. Zusätzlich oder alternativ könnten auch LEDs in Kombination mit einem Fotosensor als Sensoreinheiten 3.i verwendet werden, wobei der Fotosensor Abweichungen im Lichtstrom erkennt und damit Erschütterungen der Gebäudestruktur erkennen kann. Die so ermittelten Messwerte können beispielsweise verwendet werden, um als Frühwarnsystem die Allgemeinheit und die Bewohner des Gebäudes zu alarmieren. Weiter kann eine Analyse des Verhaltens des Gebäudes bei Erdbeben mittels einer grafischen Darstellung der Messwerte und ihre räumliche Verteilung in dem Gebäude vorgenommen werden. Diese Analyse kann dazu verwendet werden, zukünftige Gebäudestrukturen konstruktiv zu optimieren.

Alle vorstehenden Merkmale sind in dem Rahmen der in den Patentansprüchen definierten Erfindung in vorteilhafter Weise miteinander kombinierbar.

## Patentansprüche

1. Beleuchtungssystem, umfassend
eine Mehrzahl von Leuchtvorrichtungen (2.i) mit jeweils einer verbundenen Sensoreinheit (3.i), und
eine Steuereinheit (4),
wobei jede Sensoreinheit (3.i) eingerichtet ist, mindestens einen Messwert für einen lokalen Umgebungsparameter der Leuchtvorrichtungen (2.i) zu ermitteln, und an die Steuereinheit (4) zu übertragen,
wobei die Steuereinheit (4) eingerichtet ist, jeden der von der jeweiligen Sensoreinheit übertragenen Messwert mit einer Positionsinformation der jeweilig verbundenen Leuchtvorrichtung (2.i) zu verknüpfen, und
aus einer Mehrzahl der übertragenen Messwerte mit verknüpften Positionsinformationen eine Messwertverteilung zu ermitteln, und
**dadurch gekennzeichnet,**
**dass** jeder der ermittelten Messwerte ein physikalischer Parameter ist, und
**dass** die ermittelte Messwertverteilung eine räumliche Messwertverteilung mit zeitlichem Verlauf ist,
**dass** das Beleuchtungssystem zumindest einen Aktor (A1) umfasst, wobei der zumindest eine Aktor (A1) geeignet ist, den lokalen Umgebungsparameter zu verändern, und
die Steuereinheit (4) eingerichtet ist, bei einer Betätigung des Aktors (A1) eine Zuordnungsinformation des Aktors (A1) zu zumindest einer der Sensoreinheiten (3.i) mittels der ermittelten Messwertverteilung zu erstellen oder zu verändern.

2. Beleuchtungssystem nach Anspruch 1,
**dadurch gekennzeichnet,**
**dass** die Steuereinheit (4) eingerichtet ist, eine Plausibilitätsprüfung über die Messwertverteilung auszuführen, um zumindest einen fehlerhaften Messwert zu erkennen.

3. Beleuchtungssystem nach der Anspruch 2,
**dadurch gekennzeichnet,**
**dass** die Steuereinheit (4) eingerichtet ist, den erkannten fehlerhaften Messwert zu kompensieren.

4. Beleuchtungssystem nach Anspruch 3,
**dadurch gekennzeichnet,**
**dass** die Steuereinheit (4) eingerichtet ist, den erkannten fehlerhaften Messwert durch Mittelwertbildung über übertragene Messwerte weiterer, insbesondere räumlich benachbart angeordneter Sensoreinheiten (3) zu kompensieren.

5. Beleuchtungssystem nach einem der Ansprüche 1 bis 4,
**dadurch gekennzeichnet,**
**dass** der zumindest eine Aktor (A1) eine Gebäudetechnikvorrichtung, insbesondere eine Heizungsvorrichtung, eine Klimavorrichtung, eine Fensteröffnungs- und Schließvorrichtung oder eine Beschattungsvorrichtung ist.

6. Beleuchtungssystem nach einem der Ansprüche 1 bis 5, **dadurch gekennzeichnet. dass** die Sensoreinheit (3.i) eingerichtet ist, den zumindest einen Messwert über ein Kommunikationsmittel des Beleuchtungssystems zu übertragen.

7. Beleuchtungssystem nach einem der Ansprüche 1 bis 6, **dadurch gekennzeichnet, dass** jede Sensoreinheit (3.i) eingerichtet ist, zumindest einen Messwert verknüpft mit einer Adressinformation der mit der den zumindest einen Messwert ermittelnden Sensoreinheit (3.i) verbundenen Leuchtvorrichtung (2.i) zu übertragen.

8. Beleuchtungssystem nach Anspruch 7, **dadurch gekennzeichnet, dass** die Steuereinheit (4) eingerichtet ist, die empfangene Adressinformation des mindestens einen übertragenen Messwerts einer Positionsinformation der Leuchtvorrichtung (2.i), die die mit dieser Adressinformation verknüpfte Sensoreinheit (3.i) umfasst, zuzuordnen.

## Claims

1. Lighting system comprising
a plurality of lighting devices (2.i) with in each case one connected sensor unit (3.i), and
a control unit (4),
wherein each sensor unit (3.i) is set up to determine at least one measured value for a local environmental parameter of the lighting devices (2.i), and to transmit said value to the control unit (4),
wherein the control unit (4) is set up to link each of the measured values transmitted by the respective sensor unit to position information of the particular connected lighting device (2.i), and
to determine a measured-value distribution from a plurality of the transmitted measured values with linked position information, and
**characterized in that**
each of the determined measured values is a physical parameter, and
the determined measured-value distribution is a spatial measured-value distribution with a progression over time,
the lighting system comprises at least one actuator (A1), wherein the at least one actuator (A1) is suitable for changing the local environmental parameter, and
the control unit (4) is set up to create or modify assignment information of the actuator (A1) to at least one of the sensor units (3.i) by means of the determined measured-value distribution while the actuator (A1) is being actuated.

2. Lighting system according to Claim 1,
**characterized in that**
the control unit (4) is set up to carry out a plausibility check on the measured-value distribution in order to detect at least one faulty measured value.

3. Lighting system according to Claim 2,
**characterized in that**
the control unit (4) is set up to compensate for the detected faulty measured value.

4. Lighting system according to Claim 3,
**characterized in that**
the control unit (4) is set up to compensate for the detected faulty measured value by averaging over the transmitted measured values of further, in particular spatially adjacent, sensor units (3).

5. Lighting system according to any one of Claims 1 to 4,
**characterized in that**
the at least one actuator (A1) is a building services device, in particular a heating device, an air-conditioning device, a window opening and closing device, or a shading device.

6. Lighting system according to any one of Claims 1 to 5,
**characterized in that**
the sensor unit (3.i) is set up to transmit the at least one measured value via a communication means of the lighting system.

7. Lighting system according to any one of Claims 1 to 6,
**characterized in that**
each sensor unit (3.i) is set up to transmit at least one measured value linked with address information to the lighting device (2.i) that is connected to the sensor unit (3.i) determining the at least one measured value.

8. Lighting system according to Claim 7,
**characterized in that**
the control unit (4) is set up to assign the received address information of the at least one transmitted measured value to position information of the lighting device (2.i) that comprises the sensor unit (3.i) linked to this address information.

## Revendications

1. Système d'éclairage comprenant
une multitude de dispositifs lumineux (2.i) présentant chacun une unité de détecteur (3.i) raccordée et
une unité de commande (4),
chaque unité de détecteur (3.i) étant conçue pour déterminer au moins une valeur mesurée pour un paramètre environnemental local des dispositifs lumineux (2.i) et pour la transmettre à l'unité de commande (4),
l'unité de commande (4) étant conçue pour lier chaque valeur mesurée transmise par l'unité de détecteur respective à une information de position du dispositif lumineux (2.i) respectif raccordé et
pour déterminer une répartition des valeurs mesurées à partir d'une multitude des valeurs mesurées transmises avec les informations de position liées et
**caractérisé en ce**
**que** chaque valeur des valeurs mesurées déterminées est un paramètre physique et
**que** la répartition déterminée des valeurs mesurées est une répartition spatiale des valeurs mesurées avec une allure temporelle,
**que** le système d'éclairage comprend au moins un actionneur (A1), ledit au moins un actionneur (A1) étant approprié pour modifier le paramètre environnemental local et
l'unité de commande (4) est conçue pour établir ou pour modifier au moyen de la répartition déterminée des valeurs mesurées une information d'association de l'actionneur (A1) à au moins l'une des unités de détecteur (3.i) lors d'un actionnement de l'actionneur (A1).

2. Système d'éclairage selon la revendication 1,
**caractérisé en ce**
**que** l'unité de commande (4) est conçue pour exécuter un test de plausibilité sur la répartition des valeurs mesurées pour détecter au moins une valeur mesurée erronée.

3. Système d'éclairage selon la revendication 2,
**caractérisé en ce**
**que** l'unité de commande (4) est conçue pour compenser la valeur mesurée erronée détectée.

4. Système d'éclairage selon la revendication 3,
**caractérisé en ce**
**que** l'unité de commande (4) est conçue pour compenser la valeur mesurée erronée détectée par formation d'une valeur moyenne sur des valeurs mesurées transmises provenant d'autres unités de détecteur (3), en particulier disposées de manière spatialement proches.

5. Système d'éclairage selon l'une quelconque des revendications 1 à 4,
**caractérisé en ce**
**que** ledit au moins un actionneur (A1) est un dispositif de la technique de bâtiment, en particulier un dispositif de chauffage, un dispositif de climatisation, un dispositif d'ouverture et de fermeture de fenêtre ou un dispositif d'ombrage.

6. Système d'éclairage selon l'une quelconque des revendications 1 à 5,
**caractérisé en ce**
**que** l'unité de détecteur (3.i) est conçue pour transmettre ladite au moins une valeur mesurée par le biais d'un moyen de communication du système d'éclairage.

7. Système d'éclairage selon l'une quelconque des revendications 1 à 6,
**caractérisé en ce**
**que** chaque unité de détecteur (3.i) est conçue pour transmettre au moins une valeur mesurée liée à une information d'adresse du dispositif lumineux (2.i) raccordé à l'unité de détecteur (3.i) déterminant ladite au moins une valeur mesurée.

8. Système d'éclairage selon la revendication 7,
**caractérisé en ce**
**que** l'unité de commande (4) est conçue pour associer l'information d'adresse reçue de ladite au moins une valeur mesurée transmise à une information de position du dispositif lumineux (2.i), qui comprend l'unité de détecteur (3.i) liée à cette information d'adresse.
